# EUROPÄISCHE PATENTSCHRIFT

(11) **EP 3 374 221 B1**
(45) Veröffentlichungstag und Bekanntmachung des Hinweises auf die Patenterteilung: **03.04.2024**
(21) Anmeldenummer: 16795014.6
(22) Anmeldetag: 10.11.2016
(51) Int. Cl.: B60K 6/52, B60K 6/40, B60K 17/346, B60K 6/48

(54) **ANTRIEBSEINRICHTUNG FÜR EIN KRAFTFAHRZEUG**
DRIVE DEVICE FOR A MOTOR VEHICLE
DISPOSITIF D'ENTRAÎNEMENT DE VÉHICULE AUTOMOBILE

(30) Priorität: 14.11.2015 DE 102015014814
(43) Veröffentlichungstag der Anmeldung: 19.09.2018
(73) Patentinhaber: Audi AG, 85045 Ingolstadt (DE)
(72) Erfinder: PETZ, Andreas, 85276 Pfaffenhofen (DE); STRAßER, Roman, 85080 Gaimersheim (DE)
(86) Internationale Anmeldenummer: PCT/EP2016/077287
(87) Internationale Veröffentlichungsnummer: WO 2017/081165

(56) Entgegenhaltungen:
- EP-A1- 1 325 828
- DE-A1- 10 318 332
- DE-A1-102010 017 393
- DE-A1-102012 021 292
- DE-A1-102013 206 176
- FR-A1- 2 865 867
- JP-A- 2013 158 106
- JP-A- 2015 171 828
- US-A1- 2014 135 169
- US-A1- 2014 335 995

## Beschreibung

Die Erfindung betrifft eine Antriebseinrichtung für ein Kraftfahrzeug, mit wenigstens einem ersten Antriebsaggregat, wenigstens einem zweiten Antriebsaggregat sowie einem als Mittendifferentialgetriebe ausgebildeten Differentialgetriebe zur Verteilung eines von der Antriebseinrichtung bereitgestellten Antriebsdrehmoments auf mehrere Radachsen des Kraftfahrzeugs, wobei eine Eingangswelle des Differentialgetriebes mit einer Antriebswelle des ersten Antriebsaggregats über ein erstes Zahnradgetriebe und mit einer Antriebswelle des zweiten Antriebsaggregats wirkverbindbar ist, und das Differentialgetriebe jeweils eine Ausgangswelle für jede der über das Differentialgetriebe angetriebenen Radachsen des Kraftfahrzeugs aufweist.

Die Antriebseinrichtung dient dem Antreiben des Kraftfahrzeugs, insoweit also dem Bereitstellen eines auf das Antreiben des Kraftfahrzeugs gerichteten Drehmoments. Die Antriebseinrichtung ist mit wenigstens einer Radachse beziehungsweise wenigstens einem Rad des Kraftfahrzeugs wirkverbunden. Die Antriebseinrichtung weist mehrere Antriebsaggregate auf, nämlich das erste Antriebsaggregat sowie das zweite Antriebsaggregat. Beide Antriebsaggregate dienen zumindest zeitweise dem Erzeugen des von der Antriebseinrichtung bereitgestellten Antriebsdrehmoments.

Die Antriebswelle des ersten Antriebsaggregats ist über das erste Zahnradgetriebe mit der Eingangswelle des Differentialgetriebes wirkverbindbar.

Die Antriebswelle des zweiten Antriebsaggregats ist ebenfalls mit der Eingangswelle des Differentialgetriebes wirkverbindbar, besonders bevorzugt jedoch starr und/oder permanent mit ihr wirkverbunden.

In letzterem Fall ist insoweit das erste Antriebsaggregat wahlweise mit dem Differentialgetriebe beziehungsweise dessen Eingangswelle gekoppelt oder von ihm beziehungsweise ihr entkoppelt. Das zweite Antriebsaggregat steht dagegen permanent mit dem Differentialgetriebe beziehungsweise dessen Eingangswelle in Wirkverbindung.

Beispielsweise liegt hierbei eine Schaltkupplung zwischen dem ersten Antriebsaggregat und dem Differentialgetriebe vor. Die Antriebseinrichtung kann insoweit das Antriebsdrehmoment entweder mittels sowohl des ersten Antriebsaggregats als auch des zweiten Antriebsaggregats als auch allein mithilfe des zweiten Antriebsaggregats erzeugen. Das erste Antriebsaggregat liegt beispielsweise als Brennkraftmaschine vor oder weist eine solche zumindest auf. Das zweite Antriebsaggregat liegt dagegen vorzugsweise in Form einer elektrischen Maschine beziehungsweise eines Elektromotors vor.

Das Differentialgetriebe ist erfindungsgemäß als Mittendifferentialgetriebe ausgebildet, dient also der Verteilung des von der Antriebseinrichtung bereitgestellten Antriebsdrehmoments auf mehrere Radachsen des Kraftfahrzeugs, beispielsweise auf eine erste Radachse und eine zweite Radachse, insbesondere auf eine Vorderradachse und eine Hinterradachse. Zu diesem Zweck weist das Differentialgetriebe mehrere Ausgangswellen auf, nämlich jeweils eine Ausgangswelle für jede über das Differentialgetriebe angetriebene Radachse.

Bei üblichen Ausgestaltungen der Antriebseinrichtung kann es vorgesehen sein, dass das zweite Antriebsaggregat beziehungsweise seine Antriebswelle koaxial zu der Antriebswelle des ersten Antriebsaggregats angeordnet ist, und dass das Differentialgetriebe auf der dem ersten Antriebsaggregat abgewandten Seite des zweiten Antriebsaggregats vorliegt. Weil jedoch üblicherweise eine der Radachsen, beispielsweise die Vorderradachse, im Bereich des ersten Antriebsaggregats vorliegt, insbesondere in Überdeckung mit diesem vorliegt, ist es in diesem Fall notwendig, die Distanz von dem Differentialgetriebe bis hin zu der entsprechenden Radachse mithilfe einer weiteren Welle, der sogenannten Seitenwelle, zu überbrücken. Diese Welle benötigt aufgrund ihrer Position und ihres hohen Auslegungsdrehmoments ein umschließendes Gehäuse. Entsprechend ist der Bauraumbedarf der Welle sehr hoch. Weiterhin bewirkt sie ein großes Gewicht.

Aus dem Stand der Technik ist beispielsweise die Druckschrift US 2014/0335995 A1 bekannt. Diese beschreibt einen Antriebsstrang mit einem Antriebsaggregat, das eine Kurbelwelle aufweist. Ein erster Motor-Generator ist mit der Kurbelwelle über eine endlos drehbare Vorrichtung verbunden. Der Antriebsstrang umfasst ein Getriebe, mit einer mit der Kurbelwelle wirkverbundenen Eingangswelle und einer Ausgangswelle. Ein vorderes Differentialgetriebe ist mit vorderen Halbachsen wirkverbunden. Ein Verteilergetriebe ist dazu ausgebildet ein Drehmoment der Ausgangswelle des Getriebes zwischen dem vorderen Differential und einer Antriebswelle aufzuteilen. Ein hinteres Differential ist mit der Antriebswelle wirkverbindbar und dazu ausgebildet, ein Drehmoment von der Antriebswelle auf hintere Halbachsen zu übertragen. Ein zweiter Motor-Generator ist mit dem hinteren Differentialgetriebe wirkverbunden. Eine Steuereinrichtung ist mit dem zweiten Motor-Generator verbunden und steuert diesen derart, dass dieser über das hintere Differential ein Antriebsdrehmoment auf die Hinterachse des Fahrzeugs übertragen kann.

Die Druckschrift DE 10 2012 021 292 A1 beschreibt eine Antriebsvorrichtung für ein Geschwindigkeitswechselgetriebe für Kraftfahrzeuge, mit zumindest einer Getriebeeingangswelle, zumindest einer achsparallelen Abtriebswelle, mit mehreren auf den Wellen angeordneten Zahnsätzen mit Festzahnrädern und über Synchronkupplungen schaltbaren Loszahnrädern zur Bildung von Vorwärtsgängen und mit zumindest einer Trennkupplung. Erfindungsgemäß ist den Zahnradsätzen der Vorwärtsgänge ein in zwei Übersetzungsstufen umschaltbares Planetengetriebe vorgeschaltet, das ein angetriebenes Eingangselement, ein auf die Eingangswelle abtreibendes Ausgangselement und ein zum Umschalten der Übersetzungsstufen bremsbares oder kuppelbares Übertragungselement aufweist, wobei das Übertragungselement an eine Elektromaschine ankoppelbar ist, mittels der das Übertragungselement feststellbar oder in beiden Drehrichtungen antreibbar ist.

Die Druckschrift DE 103 18 332 A1 beschreibt eine Antriebsvorrichtung für allradgetriebene Kraftfahrzeuge, mit einem GeschwindigkeitsWechselgetriebe und einem Zwischenachsdifferential zur Abtriebsmomentenverteilung auf ein erstes und ein zweites Achsdifferential, über die die Vorderräder und die Hinterräder des Kraftfahrzeugs angetrieben werden, wobei eine Antriebswelle des Wechselgetriebes ein Antriebselement des Zwischenachsdifferentials antreibt und Abtriebselemente des Zwischenachsdifferentials mit den Achsdifferential trieblich verbunden sind und wobei eine die Abtriebsmomentenverteilung beeinflussende Kupplung vorgesehen ist. Eine stufenlos variable Abtriebsmomentenverteilung weist die folgenden Merkmale auf: die Abtriebsübersetzungsverhältnisse zwischen dem ersten und dem zweiten Achsdifferential sind unterschiedlich; die Auslegung des Zwischenachsdifferentials ist so, dass unterschiedliche Abtriebsmomente zu den Achsdifferentialen vorliegen, wobei das höhere Abtriebsmoment auf das kürzer übersetzte Achsdifferential gelegt ist; zwischen die Abtriebselemente des Zwischenachsdifferentials ist eine schlupfgesteuerte Lamellenkupplung eingeschaltet; und die Lamellenkupplung ist abhängig von Betriebsparametern des Kraftfahrzeugs zur variablen Verteilung der Abtriebsmomente des Zwischenachsdifferentials steuerbar.

Aus dem Stand der Technik sind weiterhin die Druckschriften DE 10 2010 017 393 A1 und DE 10 2013 206 176 A1 bekannt.

Es ist Aufgabe der Erfindung, eine Antriebseinrichtung für ein Kraftfahrzeug vorzuschlagen, welche gegenüber bekannten Antriebseinrichtungen Vorteile aufweist, insbesondere einen kompakte, platzsparende und leichte Ausgestaltung ermöglicht, welche besonders bevorzugt modular ist.

Dies wird erfindungsgemäß mit einer Antriebseinrichtung mit den Merkmalen des Anspruchs 1 erreicht. Dabei ist vorgesehen, dass die Antriebswelle des zweiten Antriebsaggregats bezüglich einer zu der Antriebswelle des ersten Antriebsaggregats koaxialen Zwischenwelle versetzt angeordnet und über ein zweites Zahnradgetriebe mit der Zwischenwelle sowie über die Zwischenwelle mit dem Differentialgetriebe wirkverbunden ist. Das zweite Antriebsaggregat beziehungsweise seine Antriebswelle ist also nicht koaxial zu dem ersten Antriebsaggregat beziehungsweise dessen Antriebswelle angeordnet, sondern vielmehr versetzt, beispielsweise parallel versetzt. Dabei liegt es ebenso versetzt beziehungsweise parallel versetzt zu der Zwischenwelle vor, welche ihrerseits koaxial zu der Antriebswelle des ersten Antriebsaggregats angeordnet ist, wobei die Antriebswelle des zweiten Antriebsaggregats koaxial zu der Eingangswelle des Differentialgetriebes angeordnet ist.

Beispielsweise ist die Antriebswelle des ersten Antriebsaggregats über eine Schaltkupplung mit der Differentialwelle wirkverbunden beziehungsweise wirkverbindbar. Während das erste Antriebsaggregat über das erste Zahnradgetriebe mit dem Differentialgetriebe wirkverbindbar beziehungsweise wirkverbunden ist, ist das zweite Antriebsaggregat über das zweite Zahnradgetriebe mit der Zwischenwelle und über diese mit dem Differentialgetriebe beziehungsweise dessen Eingangswelle wirkverbunden, vorzugsweise starr und/oder permanent. Die Wirkverbindung zwischen dem zweiten Antriebsaggregat und dem Differentialgetriebe liegt insoweit ausschließlich über das zweite Zahnradgetriebe und die Zwischenwelle vor.

Beispielsweise ist das erste Zahnradgetriebe zwischen der Zwischenwelle und der Eingangswelle des Differentialgetriebes vorgesehen. Insbesondere liegt über das erste Zahnradgetriebe eine permanente Wirkverbindung zwischen der Zwischenwelle und der Eingangswelle des Differentialgetriebes vor. In diesem Fall liegt die Wirkverbindung des zweiten Antriebsaggregats zu dem Differentialgetriebe ebenfalls über das erste Zahnradgetriebe vor. Das von dem zweiten Antriebsaggregat bereitgestellte Drehmoment wird insoweit über das zweite Zahnradgetriebe auf die Zwischenwelle und von dieser über das erste Zahnradgetriebe an die Eingangswelle des Differentialgetriebes übertragen. Wie bereits vorstehend erläutert, ist diese Wirkverbindung zwischen dem zweiten Antriebsaggregat und dem Differentialgetriebe vorzugsweise permanent realisiert.

Eine derartige Ausgestaltung der Antriebseinrichtung ermöglicht es, das Differentialgetriebe - in axialer Richtung bezüglich einer Längsmittelachse der Antriebswelle des ersten Antriebsaggregats beziehungsweise der Zwischenwelle gesehen - zwischen dem ersten Antriebsaggregat und dem zweiten Antriebsaggregat anzuordnen. Die vorstehend erwähnte zusätzliche Welle beziehungsweise Seitenwelle kann insoweit vollständig entfallen. Insbesondere ist jedoch kein zusätzliches Gehäuse für eine solche Welle notwendig.

Eine weitere Ausgestaltung der Erfindung sieht vor, dass eine erste der Ausgangswellen des Differentialgetriebes mit einer Eingangswelle eines Achsdifferentialgetriebes wirkverbunden ist. Über das Achsdifferentialgetriebe ist beispielsweise die erste Radachse des Kraftfahrzeugs mit dem Differentialgetriebe beziehungsweise dessen erster Ausgangswelle wirkverbunden. Beispielsweise ist zwischen der ersten Ausgangswelle des Differentialgetriebes und der Eingangswelle des Achsdifferentialgetriebes ein weiteres Zahnradgetriebe beziehungsweise eine Zahnradstufe vorgesehen. Das Achsdifferentialgetriebe ist - in axialer Richtung einer Längsachse des Kraftfahrzeugs gesehen - bevorzugt im Bereich des ersten Antriebsaggregats beziehungsweise überdeckend mit diesem angeordnet. Beispielsweise liegt es - bezüglich der Längsachse des Kraftfahrzeugs - neben dem ersten Antriebsaggregat vor.

Eine weitere bevorzugte Ausgestaltung der Erfindung sieht vor, dass das zweite Antriebsaggregat auf einer dem ersten Antriebsaggregat abgewandten Seite des Differentialgetriebes angeordnet ist. Auf eine derartige Ausgestaltung der Antriebseinrichtung wurde bereits hingewiesen. Auf diese Art und Weise ist eine platzsparende Ausgestaltung möglich, insbesondere ist keine weitere Welle, welche unter Umständen mit einem Gehäuse zu versehen ist, notwendig, um das zweite Antriebsaggregat zu überbrücken.

Die Erfindung sieht vor, dass die Antriebswelle des zweiten Antriebsaggregats koaxial zu der Eingangswelle des Differentialgetriebes angeordnet ist. Das bedeutet insbesondere, dass das erste Zahnradgetriebe und das zweite Zahnradgetriebe denselben Achsabstand überbrücken. Dabei ist beispielsweise zwischen der Zwischenwelle und der Eingangswelle ein kleineres Übersetzungsverhältnis vorgesehen als zwischen der Zwischenwelle und der Antriebswelle des zweiten Antriebsaggregats oder umgekehrt.

In einer Weiterbildung der Erfindung ist vorgesehen, dass eine zweite der Ausgangswellen des Differentialgetriebes die als Hohlwelle ausgebildete Antriebswelle des zweiten Antriebsaggregats durchgreift und/oder in dieser gelagert ist. Die Antriebswelle des zweiten Antriebsaggregats liegt als Hohlwelle vor. Die zweite Ausgangswelle durchgreift diese Hohlwelle vorzugsweise vollständig. Zudem kann die zweite Ausgangswelle in der Hohlwelle gelagert sein. Insofern kann die zweite Ausgangswelle des Differentialgetriebes durchaus als die vorstehend beschriebene Seitenwelle angesehen werden, weil sie der Überbrückung des zweiten Antriebsaggregats dient.

Anders als die vorstehend beschriebene Seitenwelle benötigt die zweite Ausgangswelle jedoch kein separates Gehäuse, insbesondere weil sie in der Hohlwelle aufgenommen ist, sodass die Hohlwelle im übertragenen Sinne das Gehäuse für die zweite Ausgangswelle darstellt. Die zweite Ausgangswelle dient vorzugsweise der Herstellung einer Wirkverbindung zwischen der Antriebseinrichtung und der zweiten Radachse, insbesondere der Hinterradachse des Kraftfahrzeugs. Die beschriebene Ausgestaltung ermöglicht eine besonders kompakte und gewichtsparende Anordnung der einzelnen Elemente.

Im Rahmen einer bevorzugten Weiterbildung der Erfindung ist vorgesehen, dass die Eingangswelle des Differentialgetriebes als Hohlwelle ausgebildet ist, wobei die zweite Ausgangswelle in der Eingangswelle angeordnet und/oder an dieser gelagert ist. Die zweite Ausgangswelle durchgreift insoweit die Eingangswelle des Differentialgetriebes, welche vorzugsweise koaxial zu der Antriebswelle des zweiten Antriebsaggregats ausgebildet ist.

Entsprechend ist es besonders bevorzugt vorgesehen, dass die zweite Ausgangswelle sowohl die Eingangswelle des Differentialgetriebes als auch die Antriebswelle des zweiten Antriebsaggregats durchgreift.

Dies ist insbesondere möglich, weil die Eingangswelle und die Antriebswelle des zweiten Antriebsaggregats koaxial zueinander angeordnet sind. Bevorzugt weisen sie zudem denselben Innendurchmesser auf, sodass eine Anordnung beziehungsweise Lagerung der zweiten Ausgangswelle in ihnen ohne weiteres möglich ist. Die Lagerung der zweiten Ausgangswelle kann beispielsweise mithilfe wenigstens eines Lagers, insbesondere eines Wälzlagers, realisiert sein.

Eine weitere Ausgestaltung der Erfindung sieht vor, dass das zweite Antriebsaggregat mehrere Teilantriebsaggregate aufweist. Die mehreren Teilantriebsaggregate sind beispielsweise als elektrische Maschinen beziehungsweise Elektromotoren ausgebildet. Die Teilantriebsaggregate sind alle mit der Antriebswelle des zweiten Antriebsaggregats gekoppelt, insbesondere starr und permanent gekoppelt. Auf diese Art und Weise wird eine modulare Ausgestaltung der Antriebseinrichtung erzielt, bei welcher die Anzahl der Teilantriebsaggregate je nach gewünschtem Maximaldrehmoment des zweiten Antriebsaggregats gewählt wird.

Besonders bevorzugt ist in einer weiteren Ausgestaltung der Erfindung vorgesehen, dass die mehreren Teilantriebsaggregate baugleich sind. Die Antriebseinrichtung kann also nach Art eines Baukastensystems zusammengesetzt werden. Beispielsweise wird festgelegt, welches Drehmoment das zweite Antriebsaggregat maximal bereitstellen können soll. Anschließend wird die hierfür notwendige Anzahl der Teilantriebsaggregate ermittelt, aus welcher sich zusammen mit den Abmessungen eines einzelnen der Teilantriebsaggregate die notwendigen axialen Abmessungen der Antriebswelle des zweiten Antriebsaggregats ergeben.

Beispielsweise weist die zweite Antriebswelle eine Außenverzahnung auf, welche mit einer Innenverzahnung der Teilantriebsaggregate zusammenwirken kann. Insoweit wird die notwendige Anzahl an Teilantriebsaggregaten einfach auf die hinsichtlich ihrer axialen Abmessungen entsprechend ausgewählte Antriebswelle aufgesetzt, sodass die Außenverzahnung mit den Innenverzahnungen der Teilantriebsaggregate in Eingriff steht.

Eine weitere bevorzugte Ausführungsform der Erfindung sieht vor, dass die zweite Ausgangswelle auf einer dem Differentialgetriebe abgewandten Seite des zweiten Antriebsaggregats mit einer der Radachsen des Kraftfahrzeugs wirkverbunden ist, insbesondere über ein weiteres Achsdifferentialgetriebe. Wie vorstehend bereits erläutert, soll über die zweite Ausgangswelle die Wirkverbindung zwischen der Antriebseinrichtung und einer der Radachsen des Kraftfahrzeugs, insbesondere der zweiten Radachse beziehungsweise der Hinterradachse, hergestellt sein. Vorzugsweise liegt in der Wirkverbindung zwischen der zweiten Ausgangswelle und einer der Radachsen das weitere Achsdifferentialgetriebe vor. Dieses ist insoweit ebenfalls auf der dem Differentialgetriebe beziehungsweise dem ersten Antriebsaggregat abgewandten Seite des zweiten Antriebsaggregats angeordnet.

Schließlich kann in einer weiteren bevorzugten Weiterbildung der Erfindung vorgesehen sein, dass das erste Zahnradgetriebe ein Schaltgetriebe mit mehreren Gängen ist. Dies ermöglicht es, die Wirkverbindung zwischen der Zwischenwelle und der Eingangswelle des Differentialgetriebes über unterschiedliche Übersetzungen herzustellen, wobei jeweils eine der Übersetzungen einem der mehreren Gänge zugeordnet ist. Die Übersetzungen der Gänge können grundsätzlich beliebig gewählt sein, jedoch sind sie voneinander verschieden. Beispielsweise sind die Übersetzungen aller Gänge zwischen der Zwischenwelle und der Eingangswelle des Differentialgetriebes kleiner als die Übersetzung zwischen der Zwischenwelle und der Antriebswelle des zweiten Antriebsaggregats.

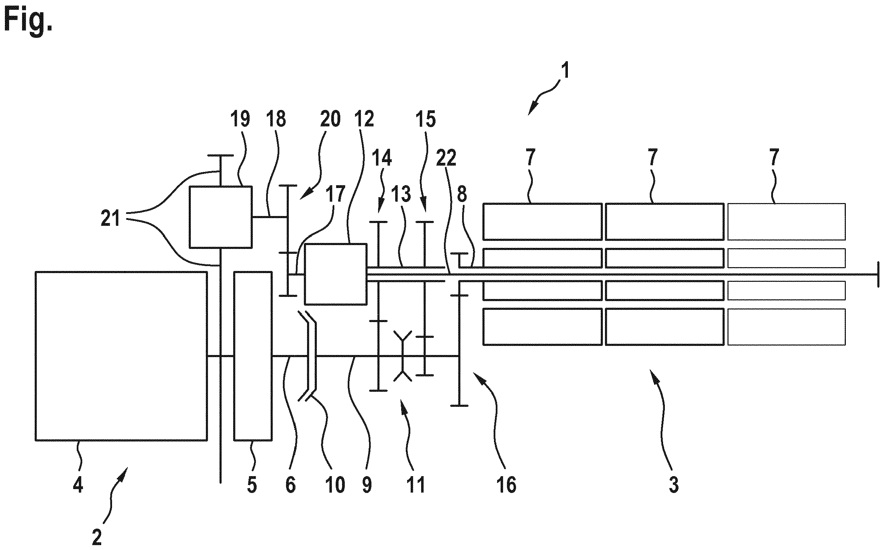

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung für ein Kraftfahrzeug, welche wenigstens ein erstes Antriebsaggregat sowie ein zweites Antriebsaggregat aufweist.

Die Figur zeigt eine schematische Darstellung einer Antriebseinrichtung 1 für ein Kraftfahrzeug. Die Antriebseinrichtung 1 verfügt über ein erstes Antriebsaggregat 2 sowie über ein zweites Antriebsaggregat 3. Das erste Antriebsaggregat 2 setzt sich beispielsweise aus mehreren Teilantriebaggregaten 4 und 5 zusammen, welche vorzugsweise starr und permanent miteinander gekoppelt sind. Insbesondere sind beide Teilantriebsaggregate 4 und 5 starr und permanent mit einer Antriebswelle 6 des ersten Antriebsaggregats 2 gekoppelt.

Das Teilantriebsaggregat 4 liegt beispielsweise als Brennkraftmaschine und das Teilantriebsaggregat 5 als elektrische Maschine beziehungsweise Elektromotor vor. Analog hierzu kann auch das zweite Antriebsaggregat 3 mehrere Teilantriebsaggregate 7 aufweisen, in dem hier dargestellten Ausführungsbeispiel drei Teilantriebsaggregate 7. Diese sind analog zu den vorstehenden Ausführungen mit einer Antriebswelle 8 des zweiten Antriebsaggregats 3 starr und permanent gekoppelt. Selbstverständlich kann es vorgesehen sein, dass jedes der Antriebsaggregate 2 und 3 lediglich ein einziges der Teilantriebsaggregate 4 und 5 beziehungsweise 8 aufweist. In diesem Fall liegt beispielsweise das erste Antriebsaggregat 2 selbst als Brennkraftmaschine vor, während das zweite Antriebsaggregat 3 als elektrische Maschine beziehungsweise Elektromotor ausgestaltet ist.

Die Antriebseinrichtung 1 weist weiterhin eine Zwischenwelle 9 auf, die koaxial zu der Antriebswelle 6 des ersten Antriebsaggregats 2 angeordnet ist. Zwischen der Antriebswelle 6 und der Zwischenwelle 9 ist eine Schaltkupplung 10 vorgesehen, mittels welcher die Wirkverbindung zwischen der Antriebswelle 6 und der Zwischenwelle 9 wahlweise hergestellt oder unterbrochen werden kann. Die Zwischenwelle 9 ist über ein erstes Zahnradgetriebe 11 mit einem Differentialgetriebe 12 beziehungsweise dessen Eingangswelle 13 wirkverbunden beziehungsweise wirkverbindbar. Beispielsweise weist das erste Zahnradgetriebe 11 mehrere Gänge auf, welche hier durch zwei Zahnradsätze 14 und 15 angedeutet sind.

Die Antriebswelle 8 des zweiten Antriebsaggregats 3 ist bezüglich der Zwischenwelle 9 und mithin auch bezüglich der Antriebswelle 6 des ersten Antriebsaggregats 2 versetzt angeordnet, insbesondere parallel versetzt. Sie steht über ein zweites Zahnradgetriebe 16 mit der Zwischenwelle 9 in Wirkverbindung, insbesondere starr und permanent. Insoweit liegt eine Wirkverbindung zwischen dem zweiten Antriebsaggregat 3 über das zweite Zahnradgetriebe, die Zwischenwelle 9 und das erste Zahnradgetriebe 11 vor, vorzugsweise ebenfalls starr und permanent.

Das Differentialgetriebe 12 verfügt über eine erste Ausgangswelle 17. Diese ist mit einer Eingangswelle 18 eines Achsdifferentialgetriebes 19 wirkverbunden beziehungsweise gekoppelt. Die Wirkverbindung zwischen der ersten Ausgangswelle 17 und der Eingangswelle 18 liegt vorzugsweise über einer Zahnradstufe 20 vor. Über das Achsdifferentialgetriebe 19 ist eine erste Radachse 21 mit der Antriebseinrichtung 1 wirkverbunden. Neben der ersten Ausgangswelle 17 weist das Differentialgetriebe 12, welches erfindungsgemäß als Mittendifferentialgetriebe vorliegt, eine zweite Ausgangswelle 22 auf. Diese dient der Herstellung einer Wirkverbindung zwischen der Antriebseinrichtung 1 und einer hier nicht dargestellten zweiten Radachse.

Es wird deutlich, dass die zweite Ausgangswelle 22 sowohl die Eingangswelle 13 des Differentialgetriebes 12 als auch die Antriebswelle 8 des zweiten Antriebsaggregats 3 durchgreift. Hierzu sind die Eingangswelle 13 und die Antriebswelle 8 als Hohlwellen ausgestaltet. Zudem fluchten die Antriebswelle 8 und die Eingangswelle 13 miteinander. Mit einer derartigen Ausgestaltung der Antriebseinrichtung 1 ist eine äußerst kompakte und gewichtsparende Anordnung der Antriebsaggregate 2 und 3 möglich. Hierbei liegt insbesondere das zweite Antriebsaggregat 3 auf einer dem ersten Antriebsaggregat 2 abgewandten Seite des Differentialgetriebes 12 vor. Weiterhin kann das zweite Antriebsaggregat 3 aufgrund seines modularen Aufbaus aus den mehreren Teilantriebsaggregaten 7 auf unterschiedliche Bedürfnisse abgestimmt werden. So kann über eine entsprechende Anzahl der Teilantriebsaggregate 7 die Bereitstellung eines bestimmten Maximaldrehmoments mithilfe des zweiten Antriebsaggregats 3 sichergestellt werden.

## Patentansprüche

1. Antriebseinrichtung (1) für ein Kraftfahrzeug, mit wenigstens einem ersten Antriebsaggregat (2), wenigstens einem zweiten Antriebsaggregat (3) sowie einem als Mittendifferentialgetriebe ausgebildeten Differentialgetriebe (12) zur Verteilung eines von der Antriebseinrichtung (1) bereitgestellten Antriebsdrehmoments auf mehrere Radachsen des Kraftfahrzeugs, wobei eine Eingangswelle (13) des Differentialgetriebes (12) mit einer Antriebswelle (6) des ersten Antriebsaggregats (2) über ein erstes Zahnradgetriebe (11) und mit einer Antriebswelle (8) des zweiten Antriebsaggregats (3) wirkverbindbar ist, und das Differentialgetriebe (12) jeweils eine Ausgangswelle (17,22) für jede der über das Differentialgetriebe (12) angetriebenen Radachsen des Kraftfahrzeugs aufweist, **dadurch gekennzeichnet, dass** die Antriebswelle (8) des zweiten Antriebsaggregats (3) bezüglich einer zu der Antriebswelle (6) des ersten Antriebsaggregats (2) koaxialen Zwischenwelle (9) versetzt angeordnet und über ein zweites Zahnradgetriebe (16) mit der Zwischenwelle (9) sowie über die Zwischenwelle (9) mit dem Differentialgetriebe (12) wirkverbunden ist, wobei die Antriebswelle (8) des zweiten Antriebsaggregats (3) koaxial zu der Eingangswelle (13) des Differentialgetriebes (12) angeordnet ist.

2. Antriebseinrichtung nach Anspruch 1, **dadurch gekennzeichnet, dass** eine erste der Ausgangswellen (17,22) des Differentialgetriebes (12) mit einer Eingangswelle (18) eines Achsdifferentialgetriebes (19) wirkverbunden ist.

3. Antriebseinrichtung nach einem der vorhergehenden Ansprüche, **dadurch gekennzeichnet, dass** das zweite Antriebsaggregat (3) auf einer dem ersten Antriebsaggregat (2) abgewandten Seite des Differentialgetriebes (12) angeordnet ist.

4. Antriebseinrichtung nach einem der vorhergehenden Ansprüche, **dadurch gekennzeichnet, dass** eine zweite der Ausgangswellen (17,22) des Differentialgetriebes (12) die als Hohlwelle ausgebildete Antriebswelle (8) des zweiten Antriebsaggregats (3) durchgreift und/oder in dieser gelagert ist.

5. Antriebseinrichtung nach einem der vorhergehenden Ansprüche, **dadurch gekennzeichnet, dass** die Eingangswelle (13) des Differentialgetriebes (12) als Hohlwelle ausgebildet ist, wobei die zweite Ausgangswelle (22) in der Eingangswelle (13) angeordnet und/oder in dieser gelagert ist.

6. Antriebseinrichtung nach einem der vorhergehenden Ansprüche, **dadurch gekennzeichnet, dass** das zweite Antriebsaggregat (3) mehrere Teilantriebsaggregate (7) aufweist.

7. Antriebseinrichtung nach einem der vorhergehenden Ansprüche, **dadurch gekennzeichnet, dass** die mehreren Teilantriebsaggregate (7) baugleich sind.

8. Antriebseinrichtung nach einem der vorhergehenden Ansprüche, **dadurch gekennzeichnet, dass** die zweite Ausgangswelle (22) auf einer dem Differentialgetriebe (12) abgewandten Seite des zweiten Antriebsaggregats (3) mit einer der Radachsen des Kraftfahrzeugs wirkverbunden ist, insbesondere über ein weiteres Achsdifferentialgetriebe.

9. Antriebseinrichtung nach einem der vorhergehenden Ansprüche, **dadurch gekennzeichnet, dass** das erste Zahnradgetriebe (11) ein Schaltgetriebe mit mehreren Gängen ist.

## Claims

1. Drive device (1) for a motor vehicle, having at least one first drive unit (2), at least one second drive unit (3) and a differential gear (12) in the form of a central differential gear for distributing a drive torque provided by the drive device (1) to a plurality of wheel axles of the motor vehicle, wherein an input shaft (13) of the differential gear (12) is operatively connected to a drive shaft (6) of the first drive unit (2) via a first gear train (11) and to a drive shaft (8) of the second drive unit (3), and the differential gear (12) has a respective output shaft (17, 22) for each of the wheel axles of the motor vehicle driven via the differential gear (12), **characterized in that** the drive shaft (8) of the second drive unit (3) is arranged offset to an intermediate shaft (9) coaxial to the drive shaft (6) of the first guide unit (2) and is operatively connected to the intermediate shaft (9) via a second gear train (16) and to the differential gear (12) via the intermediate shaft (9), wherein the drive shaft (8) of the second drive unit (3) is arranged coaxially to the input shaft (13) of the differential gear (12).

2. Drive device according to claim 1, **characterized in thata** first of the output shafts (17, 22) of the differential gear (12) is operatively connected to an input shaft (18) of an axle differential gear (19).

3. Drive device according to any one of the preceding claims, **characterized in that** the second drive unit (3) is arranged on a side of the differential gear (12) facing away from the first drive unit (2).

4. Drive device according to any one of the preceding claims, **characterized in that** a second of the output shafts (17, 22) of the differential gear (12) engages through and/or is mounted in the drive shaft (8) of the second drive unit (3) which is the form of a hollow shaft.

5. Drive device according to any one of the preceding claims, **characterized in that** the input shaft (13) of the differential gear (12) is the form of a hollow shaft, wherein the second output shaft (22) is arranged in the input shaft (13) and/or is mounted therein.

6. Drive device according to any one of the preceding claims, **characterized in that** the second drive unit (3) has a plurality of partial drive units (7).

7. Drive device according to any one of the preceding claims, **characterized in that** the plurality of partial drive units (7) have an identical structure.

8. Drive device according to any one of the preceding claims, **characterized in that** the second output shaft (22) is operatively connected to one of the wheel axles of the motor vehicle on a side of the second drive unit (3) facing away from the differential gear (12), in particular via a further axle differential gear.

9. Drive device according to any one of the preceding claims, **characterized in that** the first gear train (11) is a manual transmission with a plurality of gears.

## Revendications

1. Dispositif d'entraînement (1) pour un véhicule automobile, avec au moins un premier agrégat d'entraînement (2), au moins un second agrégat d'entraînement (3) ainsi qu'un engrenage différentiel (12) réalisé sous la forme d'un engrenage différentiel central pour la distribution d'un couple d'entraînement fourni par le dispositif d'entraînement (1) à plusieurs essieux de roue du véhicule automobile, dans lequel un arbre d'entrée (13) de l'engrenage différentiel (12) peut être relié fonctionnellement à un arbre d'entraînement (6) du premier agrégat d'entraînement (2) par le biais d'une première transmission à engrenage (11) et à un arbre d'entraînement (8) du second agrégat d'entraînement (3), et l'engrenage différentiel (12) présente respectivement un arbre de sortie (17, 22) pour chacun des essieux de roue entraînés par le biais de l'engrenage différentiel (12) du véhicule automobile, **caractérisé en ce**que l'arbre d'entraînement (8) du second agrégat d'entraînement (3) est agencé en déport par rapport à un arbre intermédiaire (9) coaxial à l'arbre d'entraînement (6) du premier agrégat d'entraînement (2) et est relié fonctionnellement par le biais d'une seconde transmission à engrenage (16) à l'arbre intermédiaire (9) ainsi que par le biais de l'arbre intermédiaire (9) à l'engrenage différentiel (12), dans lequel l'arbre d'entraînement (8) du second agrégat d'entraînement (3) est agencé de manière coaxiale à l'arbre d'entrée (13) de l'engrenage différentiel (12).

2. Dispositif d'entraînement selon la revendication 1, **caractérisé en ce qu'**un premier des arbres de sortie (17, 22) de l'engrenage différentiel (12) est relié fonctionnellement à un arbre d'entrée (18) d'un engrenage différentiel d'essieu (19).

3. Dispositif d'entraînement selon l'une quelconque des revendications précédentes, **caractérisé en ce que** le second agrégat d'entraînement (3) est agencé sur un côté éloigné du premier agrégat d'entraînement (2) de l'engrenage différentiel (12).

4. Dispositif d'entraînement selon l'une quelconque des revendications précédentes **caractérisé en ce qu'**un second des arbres de sortie (17, 22) de l'engrenage différentiel (12) pénètre l'arbre d'entraînement (8) réalisé comme arbre creux du second agrégat d'entraînement (3) et/ou est logé dans celui-ci.

5. Dispositif d'entraînement selon l'une quelconque des revendications précédentes, **caractérisé en ce que** l'arbre d'entrée (13) de l'engrenage différentiel (12) est réalisé comme arbre creux, dans lequel le second arbre de sortie (22) est agencé dans l'arbre d'entrée (13) et/ou est logé dans celui-ci.

6. Dispositif d'entraînement selon l'une quelconque des revendications précédentes, **caractérisé en ce que** le second agrégat d'entraînement (3) présente plusieurs agrégats d'entraînement partiel (7).

7. Dispositif d'entraînement selon l'une quelconque des revendications précédentes, **caractérisé en ce que** les plusieurs agrégats d'entraînement partiel (7) présentent une structure identique.

8. Dispositif d'entraînement selon l'une quelconque des revendications précédente**scaractérisé en ce que** le second arbre de sortie (22) est relié fonctionnellement à un des essieux de roue du véhicule automobile sur un côté éloigné de l'engrenage différentiel (12) du second agrégat d'entraînement (3), en particulier par le biais d'un engrenage différentiel d'essieu supplémentaire.

9. Dispositif d'entraînement selon l'une quelconque des revendications précédentes, **caractérisé en ce que** la première transmission par engrenage (11) est une boîte de vitesses à plusieurs rapports.
